# EUROPÄISCHE PATENTANMELDUNG

(11) **EP 4 666 921 A1**
(43) Veröffentlichungstag der Anmeldung: **24.12.2025**
(21) Anmeldenummer: 25178936.8
(22) Anmeldetag: 27.05.2025
(51) Int. Cl.: A47K 3/30, A47K 4/00, A47K 3/28, B60R 15/02

(54) **KÜCHEN-DUSCH-KABINE**

(30) Priorität: 28.05.2024 DE 102024001881
(71) Anmelder: Mozer, Jürgen, 71546 Aspach (DE)
(72) Erfinder: Mozer, Jürgen, 71546 Aspach (DE)

(57) **Zusammenfassung**

Die Erfindung betrifft Zelle mit Küche (Kochstelle und Spüle) sowie eine vollwertige Duschkabine mit großzügiger Bewegungsfreiheit. Die Dusche nützt den Platz der Kochstelle, welche als Boden eine Duschwanne hat. Die Dusche braucht bei Nichtbenutzung keinen Platz, dadurch können Dusche, Kochstelle, Spüle schon auf eine Grundfläche von 60*80cm untergebracht werden. Es ist auch noch Platz für ein WC und einen Waschtisch und alles kann auch auf dieser keinen Flächen genutzt werden. Dadurch ergibt sich ein extremer Raumgewinn. Wenn die Nass-Zelle eine Klapp-Schiebe-Tür hat, ist sie, wenn nicht geduscht wird vollkommen in das Fahrzeug integriert und gibt zusätzliche Fläche frei und man hat ein großzügiges Raumgefühl. Ins besonders bei kleineren Bauräumen und kleineren Fahrzeugen ist die von Vorteil und spart zusätzlich Gewicht.

## Beschreibung

### Technisches Gebiet

Die Erfindung betrifft eine Küchen-Dusch-Kabine für Reisemobile, Wohnwagen, Boote und Tiny House. Die Küchen-Dusch-Kabine besteht aus Duschkabine und Küchenelementen und kann ein WC sowie Waschtisch enthalten.

### Neuerung

Betrifft eine Küchen-Dusch-Kabine, bei der die Dusche den Platz der Küche nutzt und somit keinen Platz benötigt, wenn nicht geduscht wird Fig.03. Es ist uns kein Modul bekannt bei dem die Küchenelemente den Platz der Dusche nutzen und zum Duschen freigeben. Der Boden unter der Kochstelle und oder der Spüle ist eine Duschwanne und das Kochelement kann weggeklappt werden. Dadurch entsteht eine Vollwertigen, festeingebauten Duschkabine mit großzügiger Bewegungsfreiheit, ohne jeglichen Platzbedarf, wenn nicht geduscht wird Fig.06. Zusätzlich kann die Spüle aus der Küchen-Dusch-Kabine geschoben werden und die Duschkabine wird noch größer Fig.08. Somit können in der Zelle ab einer Größe von 60cm * 80cm eine Duschkabine, Kochstelle, Spüle, untergebracht werden und sind auch auf dieser keinen Flächen auch nutzbar. Zusätzlich können auch Waschtisch und WC ohne mehr Grundfläche integriert werden.

### Hintergrund der Erfindung

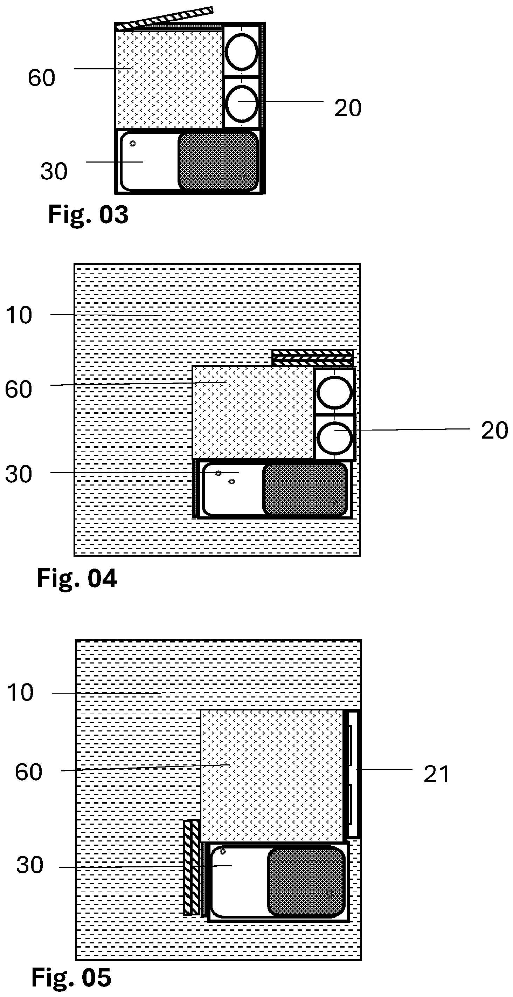

Bei Reisemobile, Wohnwagen, Boote, Tiny House besteht die Notwenigkeit auf möglichst kleinstem Raum viele Elemente bei minimalem Gewicht und kostengünstig, unterzubringen. Wenn die Küchen-Dusch-Kabine eine Klapp-Schiebe-Tür hat, ist sie, wenn nicht geduscht wird vollkommen in das Fahrzeug integriert und gibt zusätzliche Fläche frei und man hat ein großzügiges Raumgefühl Fig.04, oder kann als Gang genutzt werden. Wird die Klapp-Schiebetür an der Spüle-Wand angeschlagen und Die Kochstelle hochgeklappt, hat man noch mehr Bewegungsfreiheit Fig.05

### Stand der Technik

Die nach dem Stand der Technik bekannten Lösungen von Nass-Zellen mit beweglichen Modulen sind dadurch gekennzeichnet, dass sie nur Sanitärelemente enthalten. *D2-*DE 297 01 860 U1 / *3-*DE 20 2023 102 872 U1 / *D4-*DE 20 2005 007 468 U1 / *D5-*DE 10 2015 117 421 A1 / *D6-*DE 299 16 323 U1 / *D7-*DE 203 15 090 U1 / *D9-*WO 1996 / 011 124 A1 / *D10-*WO 1989 / 004 778 A1

Es gibt nur wenige Nass-Zellen die Küchenelemente enthalte. Bei diesen sind die Küchenelemente aber immer fest eingebaut. Der Nachteil ist, dass die Dusche bez. die Küchenelemente zusätzlicher Platz benötigten. Es gibt auch keine feste Duschkabine, sondern es wird ein Duschvorhang benötigt.

*D1-* CN 2 18 558 691 U - Diese Modul hat vor/zwischen den Küchenelementen und Sanitärelemente eine Duschwanne aber keine fest eingebaute Duschkabine.

Die Küchen- und Sanitär- Elemente, sind fest eingebaut, braucht zusätzlichen Platz und ein Duschvorhang wird benötigt. Dieses Modul braucht viel Platz und eignet sich nur für größere Fahrzeuge.

*D11 -* KR 10 2023 005 542 A Diese Ausführung hat keine Nass-Zelle, sondern nur vor den Küchenelementen eine Duschwanne. Die Küchenelemente, sind fest eingebaut, braucht zusätzlichen Platz.

*D8 -* US 5 862 540 A - Diese Ausführung hat keine Küchen-Dusch-Kabine, sondern nur Außenduschen.

### Darstellung der Erfindung

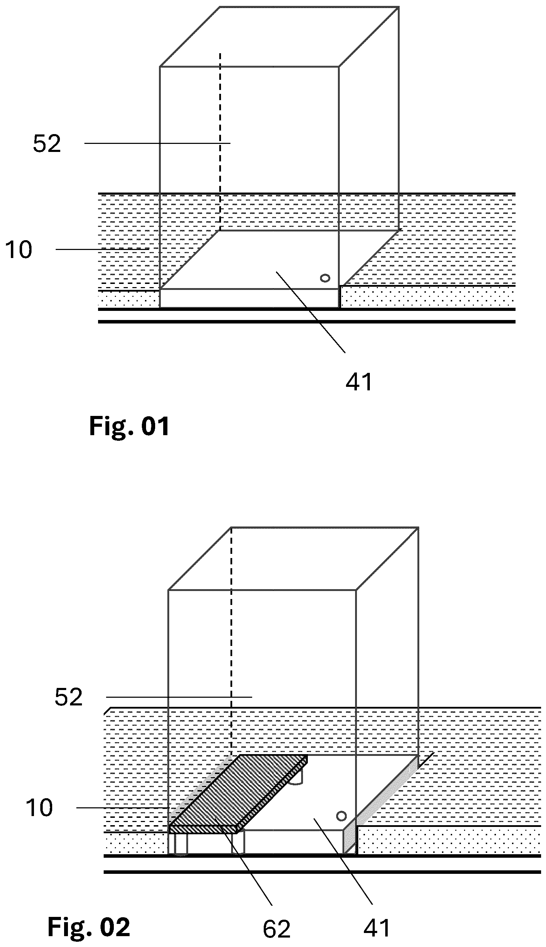

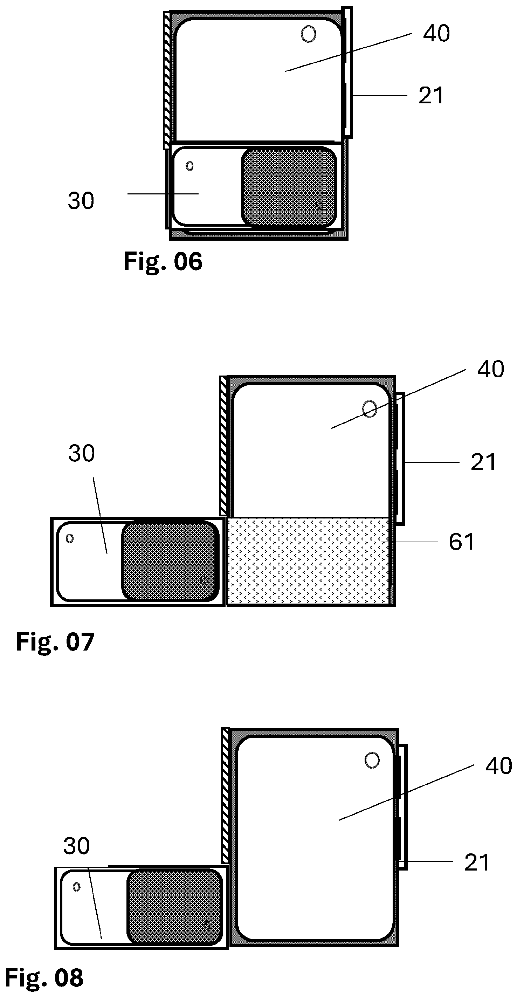

Die Erfindung betrifft einen wasserdichten Raum mit Kochmodul, Spüle und Duschkabine Fig.03 sowie Platz für die Toilette unter der Spüle. Das Modul hat eine Tür und ist als Duschkabine konfiguriert. Der Boden besteht aus eigener Duschwanne. Durch eine Duschwannen-Einlage wird die Bodenhöhe zum Außenboden ausgeglichen Fig.02. Zum Duschen kann das Kochelement weggeklappt bez. geschwenkt werden, die Duschwannen-Einlage entnommen und die Tür geschlossen werden. Dadurch entsteht eine vollwertige Duschkabine Fig.06. Die Spüle kann auf durch ein Rollo, eine Klapp-Tür oder Duschvorhang getrennt werden. Die Spüle kann auch als Schublade gestaltet werden oder weggeschwenkt, oder weggeklappt werden. Dadurch wird die komplette Zelle zur Duschkabine Fig.08 oder es ergibt einen Umkleidebereich Fig.07.

Die Zelle kann fest eingebaut werden oder als entnehmbares Modul ausgeführt werden. Als Modul ist die Duschwanne fest mit der Zelle verbunden und wird auf den Fahrzeugboden gestellt. Optional kann aber auch die Duschwanne im Fahrzeug-Boden integriert werden und die Küchen-Dusch-Kabine ohne Boden wird darüber positioniert.

### Aufgabe

Die Aufgabe der Erfindung ist eine vollwertige Duschkabine und großzügige Küche auf kleinstem Raum, ab 60cm*80cm, bei minimalem Gewicht und kostengünstig, unterzubringen.

### Lösung

Die Dusche nützt den Platz der Küche, dadurch entsteht eine Vollwertigen, festeingebauten Duschkabine mit großzügiger Bewegungsfreiheit Fig. 06/ Fig.07 /Fig.08 ohne jeglichen Platzbedarf, wenn nicht geduscht wird Fig.03.

### Vorteile

In der Basis-Stellung sind die Küchenmodule nutzbar und die Dusche braucht keinen Platz, wenn nicht geduscht wird Fig.03. Somit können in der Zelle ab einer Größe von 60cm * 80cm eine Duschkabine, Kochstelle, Spüle, Waschtisch und WC untergebracht werden und sind auch auf dieser keinen Flächen nutzbar. Wird die Nass-Zelle mit einer Klappschiebetür ausgestattet, ist die Nass-Zelle in das Fahrzeug integriert und der Raum kann optimal genutzt werden. Fig.04. Ist das Kochmodul hochgeklappt und die Klapp-Schiebetüre an der Spüle angeschlagen Fig.05. wird die ganze Fläche in das Wohnmobil integriert.

### Zeichnungslegende

10 Fahrzeugboden
20 Kochstelle Arbeitsstellung
21 Kochstelle hochgeklappt
30 Spüle
40 Duschwanne
41 Duschwanne dreidimensional
50 Küchen-Dusch-Kabine mit Tür
51 Küchen-Dusch-Kabine mit Schiebe-Klapp-Tür
52 Küchen-Dusch-Kabine dreidimensional
60 Duschwannen-Einlage-Kochstelle
61 Duschwannen-Einlage-Spüle
62 Duschwannen-Einlage dreidimensional
Fig. 1 Küchen-Dusch-Kabine mit Duschwanne im Fahrzeugboden eingelassen.
Fig. 2 Küchen-Dusch-Kabine mit Duschwanne und Duschwannen-Einlage Spüle.
Fig. 3 Küchen-Dusch-Kabine in Basis-Stellung als Küche
Fig. 4 Küchen-Dusch-Kabine in Basis-Stellung als Küche mit Schiebe-Klapp-Tür
Fig. 5 Küchen-Dusch-Kabine in Basis-Stellung mit hochgeklappter Kochstelle
Fig. 6 Küchen-Dusch-Kabine als kleine Duschkabine
Fig. 7 Küchen-Dusch-Kabine als Duschkabine mit Umkleidebereich
Fig. 8 Küchen-Dusch-Kabine als große Duschkabine

## Patentansprüche

1. Küchen-Dusch-Kabine für Reisemobile, Wohnwagen, Boote, Tiny House mit Dusche, Kochstelle und/oder Spüle, **dadurch gekennzeichnet, dass** die Dusche den Platz der Küche nutzt und daher keinen Platz benötigt, wenn nicht geduscht wird.

2. Küchen-Dusch-Kabine nach Anspruch 1, **dadurch gekennzeichnet, dass** die Kochstelle und/oder Spüle innerhalb der Küchen-Dusch-Kabine angebracht sind.

3. Küchen-Dusch-Kabine nach Anspruch 1 und 2, **dadurch gekennzeichnet, dass** die Kochstelle und/oder der Spüle eine Duschwanne als Boden hat.

4. Küchen-Dusch-Kabine nach Anspruch 1 bis 3, **dadurch gekennzeichnet, dass** das Kochmodul und/oder Spüle weggeklappt, geschwenkt, verschoben oder entnommen werden kann und Platz zum Duschen freigibt.

5. Küchen-Dusch-Kabine nach Anspruch 1 bis 4, **dadurch gekennzeichnet, dass** die Zelle als Moduleinheit aus dem Fahrzeug, Reisemobile, Wohnwagen, Boote, Tiny House, ausgebaut und bei Bedarf wieder eingebaut werden kann.

6. Küchen-Dusch-Kabine nach Anspruch 1 bis 4, **dadurch gekennzeichnet, dass** die Zelle als Moduleinheit in einem Reisemobil, Wohnwagen, Boot, Tiny House, etc. fest festeingebaut werden kann.
